(19) Europäisches Patentamt
European Patent Office
Office européen des brevets

(11) **EP 3 002 140 B1**

(12) **FASCICULE DE BREVET EUROPEEN**

(45) Date de publication et mention de la délivrance du brevet:
**05.07.2017 Bulletin 2017/27**

(51) Int Cl.:
***B60G 17/016*** *(2006.01)*   ***B60G 17/018*** *(2006.01)*

(21) Numéro de dépôt: **15187848.5**

(22) Date de dépôt: **01.10.2015**

(54) **SYSTEME DE PILOTAGE D'AMORTISSEURS**

STEUERUNGSSYSTEM VON STOSSDÄMPFERN

DAMPER CONTROL SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.10.2014 FR 1459429**

(43) Date de publication de la demande:
**06.04.2016 Bulletin 2016/14**

(73) Titulaire: **Renault S.A.S.**
**92100 Boulogne-Billancourt (FR)**

(72) Inventeurs:
• **BEY, Mehdi**
**91680 BRUYERES LE CHATEL (FR)**
• **BOUTRON, Olivier**
**27940 AUBEVOYE (FR)**
• **PLICHET, Roger**
**27340 PONT DE L'ARCHE (FR)**
• **LEROY, Philippe**
**91940 LES ULIS (FR)**
• **DESNOYER, François**
**75014 PARIS (FR)**

(56) Documents cités:
EP-A2- 0 415 269      EP-A2- 1 623 856
FR-A1- 2 890 902      FR-A1- 2 971 457
US-A1- 2012 055 745

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention concerne le pilotage d'amortisseurs de suspension des véhicules automobiles.

Lors des accélérations, freinage, passages de dénivellations ou d'irrégularités sur une route, les véhicules sont soumis notamment à des mouvements de tangage. Afin de réduire les mouvements de tangage, il est connu d'utiliser des moyens de suspension incluant des amortisseurs.

Des amortisseurs passifs peuvent être utilisés. Les amortisseurs passifs fonctionnent seulement par réaction aux sollicitations mécaniques générées par des mouvements de caisse. Dans ce cas, les lois d'amortissement sont dépourvues de pilotage. L'amortissement est constant quelles que soient les conditions d'utilisation du véhicule tant que les sollicitations mécaniques restent constantes. Le compromis entre le confort pour l'utilisateur et la tenue de route du véhicule est figé et ne peut pas être modifié sans intervention complexe et à l'arrêt du véhicule. Autrement dit, le couplage entre la masse suspendue telle que la caisse et les masses non suspendues telles que les roues est immuable quelles que soient les situations de conduite.

D'autres systèmes d'amortisseurs proposent quelques niveaux discrets d'amortissement. Le nombre de lois effort/vitesse des amortisseurs est fini. L'amplitude des mouvements n'est pas prise en compte et seules des conditions particulières de conduites peuvent être prises en compte ponctuellement.

Des systèmes de pilotage d'amortissement ont été développés afin d'adapter en temps réel le comportement en amortissement du véhicule. En particulier, chacun des quatre amortisseurs, ou par paire, peut alors présenter un comportement en amortissement distinct des autres et modifiable continument entre une valeur minimum et une valeur maximum. Ce type de système nécessite de connaître avec précision et en temps réel le comportement dynamique du véhicule. En particulier, chaque composante des mouvements de tangage du véhicule par rapport à la route sur laquelle reposent les roues doit être mesurée et traitée en temps réel.

Pour suivre le comportement dynamique de la caisse d'un véhicule en temps réel, des capteurs nombreux et complexes sont utilisés, par exemple des accéléromètres, des gyroscopes et des gyromètres. De manière générale, ces capteurs et leur câblage sont intégrés dans le véhicule spécialement pour remplir cette fonction. L'installation et l'étalonnage de chacun de ces capteurs sont complexes et alourdissent le véhicule. Un tel système présente une fiabilité dégradée avec l'augmentation du nombre de capteurs utilisés. Par ailleurs, l'encombrement des capteurs et de leurs branchements complexifie la conception des véhicules. Ces problèmes deviennent critiques lorsque le bon fonctionnement des capteurs impose une disposition des capteurs en des endroits déjà encombrés tels qu'au voisinage des centres de roues et passages de roues.

La Demanderesse a alors proposé un système de pilotage simplifié, décrit par exemple dans la demande de brevet FR 2 971 457, déposée le 10 février 2011 et que le lecteur est invité à consulter. Ce système résout certains des problèmes énoncés ci-dessus et donne satisfaction. De plus, le document FR 2 890 902 A1, qui est considéré comme l'état de la technique le plus proche des revendications 1 et 9, divulgue un système et un procédé de pilotage d'amortisseurs de suspension d'un véhicule automobile. Toutefois, il existe un besoin pour un pilotage à la fois simple par le nombre et le type de capteurs nécessaires et capable de présenter une adaptabilité encore améliorée aux situations de conduite.

Il est proposé un procédé de pilotage d'amortisseurs de suspension d'un véhicule automobile, comprenant :

- calculer une donnée représentative d'un mouvement de tangage estimé du véhicule à un instant $t_1$ en fonction de valeurs de paramètres correspondant à un instant $t_0$, $t_1$ étant postérieur à $t_0$,

- déduire une valeur de commande destinée aux amortisseurs du véhicule en fonction de la donnée représentative du mouvement de tangage estimé du véhicule à l'instant $t_1$,

- recevoir une donnée représentative des résidus de mouvements de tangage du véhicule à l'instant $t_1$, et

- déduire de la donnée représentative des résidus de mouvements de tangage une consigne de décroissance dans le temps de la valeur de la commande.

On peut ainsi piloter les amortisseurs du véhicule afin d'adapter en continu la loi d'amortissement au cours du roulage, non seulement à l'apparition d'une situation mais aussi au cours de sa disparition progressive.

Les valeurs de paramètres peuvent être reçues au cours d'une étape préalable de réception, et peuvent comprendre une donnée représentative de la vitesse longitudinale du véhicule, une donnée représentative de la pression du maître cylindre et/ou une donnée représentative de la consigne de puissance moteur, à l'instant $t_0$.

La valeur de commande peut être déduite à partir en outre d'une cartographie préétablie.

Un tel procédé peut impliquer un relativement faible nombre de capteurs, voire uniquement des capteurs utilisés ou utilisables par d'autres systèmes électroniques du véhicule. Les données rendues disponibles par ces capteurs peuvent être mutualisées au sein du véhicule. À titre d'exemple, des véhicules déjà pourvus d'un système ABS peuvent mettre en oeuvre ce procédé sans qu'aucun capteur ne soit ajouté.

Il est en outre proposé un système de pilotage d'amortisseurs de suspension d'un véhicule automobile comprenant :

- un bloc de prévision de tangage configuré pour recevoir en entrée des valeurs de paramètres correspondant à un instant to, par exemple une donnée représentative de la vitesse longitudinale du véhicule, une donnée représentative de la pression du maître cylindre et une donnée représentative de la consigne de puissance moteur, à l'instant to, et apte à calculer une donnée représentative d'un mouvement de tangage estimé du véhicule à un instant $t_1$ en fonction des valeurs de paramètres correspondant à l'instant to, où $t_1$ est postérieur à to, et

- un bloc de calcul de commande agencé pour déduire une valeur de commande destinée aux amortisseurs du véhicule en fonction de la donnée représentative du mouvement de tangage estimé du véhicule à l'instant $t_1$ et, avantageusement, en fonction en outre d'une cartographie préétablie, le bloc de calcul de commande étant en outre configuré pour recevoir en entrée une donnée représentative des résidus de mouvements de tangage du véhicule à l'instant $t_1$ et à en déduire une consigne de décroissance dans le temps de la valeur de la commande.

Ce système peut être intégré dans ou comprendre un ou plusieurs processeurs, par exemple un microcontrôleur, un microprocesseur, ou autre.

Avantageusement et de façon non limitative, le bloc de calcul de commande peut en outre être apte à déduire la consigne de décroissance dans le temps de la valeur de la commande en fonction de la cartographie préétablie. L'adaptation du comportement de l'amortissement peut ainsi être calibrée plus finement en fonction de chaque véhicule dès la conception. Le compromis entre confort et tenue de route s'applique, par exemple, jusqu'en fin de côte ou de descente.

Avantageusement et de façon non limitative, le bloc de calcul de commande peut être configuré pour appliquer la décroissance dans le temps de la valeur de la commande seulement si :

- la pression du maître cylindre est comprise dans une plage prédéfinie pendant une durée comprise dans une plage prédéfinie et/ou si

- la consigne de puissance moteur est comprise dans une plage prédéfinie pendant une durée comprise dans une plage prédéfinie.

Ainsi, l'adaptation de l'amortissement peut être empêchée dans des situations particulières, par exemple lors de manoeuvres de parking sur un terrain en pente durant lesquelles une adaptation dynamique de l'amortissement n'est pas souhaitée.

Avantageusement et de façon non limitative, le système peut être dépourvu de capteur de débattement des roues du véhicule. Les zones encombrées et complexes des roues peuvent être dépourvues de capteurs ajoutés spécifiquement pour alimenter le système.

Avantageusement et de façon non limitative, le système peut être dépourvu de capteur apte à mesurer directement la position angulaire du véhicule par rapport à un axe transversal. Le système peut fonctionner sans mettre en oeuvre, par exemple, des gyroscopes qui nécessitent un calibrage délicat et présentent une réactivité limitée.

Avantageusement et de façon non limitative, la cartographie préétablie peut être sélectionnable parmi plusieurs cartographies disponibles par une commande opérable par un conducteur du véhicule. L'amortissement dépend alors du choix effectué par le conducteur.

Selon un autre aspect, il est proposé un véhicule pourvu d'un système tel que décrit ci-dessus. Ce véhicule peut être thermique, électrique, hybride, ou autre.

Il est en outre proposé un produit programme d'ordinateur comprenant des instructions pour effectuer les étapes décrites ci-dessus lorsque ces instructions sont exécutées par un processeur.

D'autres caractéristiques, détails et avantages de l'invention apparaîtront à la lecture de la description détaillée ci-après, et des dessins annexés, sur lesquels :

- la figure 1 est une vue schématique en perspective d'un ensemble d'amortisseurs d'un véhicule, et

- la figure 2 est un schéma fonctionnel d'un exemple de système de suspension piloté selon un mode de réalisation de l'invention.

Les dessins et descriptions ci-après contiennent, pour l'essentiel, des éléments de caractère certain. Ils pourront donc non seulement servir à mieux faire comprendre la présente invention mais aussi contribuer à sa définition, le cas échéant.

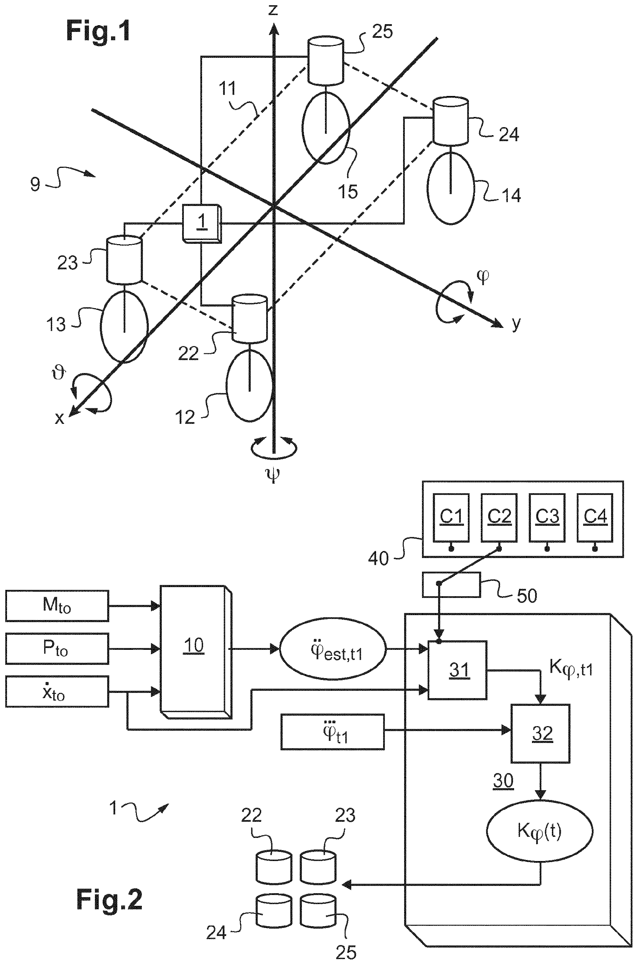

En référence à la figure 1, un véhicule 9 comprend une caisse 11 représentée en pointillés sur la figure 1, une roue avant gauche 12, une roue avant droite 13, une roue arrière gauche 14 et une roue arrière droite 15. Les quatre roues 12, 13, 14, 15 sont reliées à la caisse 11 par l'intermédiaire d'une suspension correspondante 22, 23, 24, 25. Chaque suspension 22, 23, 24, 25 inclut un amortisseur pilotable, c'est-à-dire dont la vitesse de compression/détente par rapport à la force qui lui est appliquée peut être réglée continument.

Dans l'exemple décrit ici, les amortisseurs sont hydrauliques et pourvus de deux électrovannes commandées à distance. Le fonctionnement mécanique des amortisseurs et les changements de dureté/souplesse de chaque amortisseur par le jeu des électrovannes est connu en tant que tel.

Sur la figure 1, un axe longitudinal orienté de l'arrière vers l'avant du véhicule 9, ou axe de roulis, est référencé x. Un axe transversal orienté de la droite vers la gauche du véhicule 9, ou axe de tangage, est référencé y. Un axe orienté du bas vers le haut du véhicule 9, ou axe de lacet, est référencé z. Les trois axes x, y, z, définissent un repère orthonormé.

En roulage, le véhicule 9 subit des mouvements de roulis, c'est-à-dire des mouvements de rotation autour de l'axe de roulis x représentés par la double flèche référencée par la lettre grecque ϑ. Lors du roulage, le véhicule 9 subit des mouvements de tangage, c'est-à-dire des mouvements de rotation autour de l'axe de tangage y représentés par la double flèche référencée par la lettre grecque φ. Lors du roulage, le véhicule 9 subit des mouvements de lacet, c'est-à-dire des mouvements de rotation autour de l'axe de lacet z représentés par la double flèche référencée par la lettre grecque ψ. Le véhicule 9 peut également subir des mouvements de pompage, c'est-à-dire des mouvements de translation selon l'axe vertical z. Les quatre mouvements précités forment chacun une composante du comportement de la caisse 11 du véhicule 9 en roulage.

La vitesse longitudinale du véhicule 9 correspond à la dérivée temporelle première de la position du véhicule 9 selon l'axe longitudinal x par rapport au sol supportant le véhicule 9 et est donc référencée $\dot{x}$. Suivant la même convention, la position angulaire de la caisse 11 selon l'axe de tangage y est référencée $\varphi$. La vitesse de tangage, correspondant à la dérivée temporelle première de la position angulaire de tangage $\varphi$, est référencée $\dot{\varphi}$. L'accélération du mouvement de tangage, correspondant à la dérivée temporelle seconde de la position angulaire de tangage $\varphi$ et à la dérivée temporelle première de la vitesse de tangage $\dot{\varphi}$, est référencée $\ddot{\varphi}$. Le jerk transversal, correspondant à la dérivée temporelle troisième de la position angulaire de tangage $\varphi$, à la dérivée temporelle seconde de la vitesse de tangage $\dot{\varphi}$ et à la dérivée temporelle première de l'accélération du mouvement de tangage $\ddot{\varphi}$, est référencée $\dddot{\varphi}$. Le jerk peut aussi être appelé "*à-coup*" ou "*secousse*", ou encore "*jolt*", "*surge*" ou "*lurch*" en anglais.

En référence à la figure 2, le système 1 de pilotage d'amortisseur comprend un bloc de prévision de tangage 10 et un bloc de calcul de commande 30. Le bloc de prévision de tangage 10 et le bloc de calcul de commande 30 appartiennent ici à un calculateur dédié aux amortisseurs 22, 23, 24, 25. En variante, le bloc de prévision de tangage 10 et le bloc de calcul de commande 30 peuvent être intégrés à un calculateur intervenant dans d'autres traitements électroniques du véhicule 9. Par exemple, un tel calculateur pourrait également former un élément d'un système d'adaptation de l'assiette du véhicule 9 et/ou un élément d'un système anti-blocage (ou ABS pour "*Antiblockiersystem*") et/ou un élément d'un système correcteur électronique de trajectoire (ou ESP pour "*Electronic Stability Program*").

Un système d'adaptation de l'assiette permet de tarer la position initiale de chaque amortisseur (à l'arrêt du véhicule). Généralement, le tarage est piloté par modulation de la pression de gaz dans les amortisseurs. L'adaptation de l'assiette permet de :

- compenser la charge ou le délestage du véhicule 9 et adapter en conséquence la hauteur de la caisse 11 par rapport au sol, c'est-à-dire la garde au sol ; et/ou

- régler la hauteur de la caisse 11 par rapport au sol en fonction des situations. Par exemple, une position basse est préférable sur autoroute pour améliorer le comportement aérodynamique et réduire la consommation tandis qu'une position haute est préférable pour du franchissement ou sur route accidentée afin d'éviter que la caisse 11 n'entre en contact avec des irrégularités du sol.

Un système d'adaptation de l'assiette est généralement considéré comme un système à correction lente. Contrairement aux systèmes d'amortissements variables, il n'a pas vocation à s'adapter aux variations rapides d'altitudes consécutives de mouvements de pompage, tangage ou roulis. La compensation de la charge ou du délestage par des mouvements verticaux de la caisse 11 sont généralement déclenchés lorsque le véhicule 9 est à l'arrêt. Le tarage peut être sélectionné manuellement par le conducteur, être semi-automatisé, automatisé ou une combinaison de manuel et d'automatique. Une fois le tarage réalisé, le système d'amortissement variable va piloter l'amortissement, c'est-à-dire les mouvements dynamiques de chaque amortisseur autour de sa position de référence préalablement tarée.

Le bloc de prévision de tangage 10 et le bloc de calcul de commande 30 sont ici connectés à un réseau multiplexé du véhicule 9, par exemple un réseau CAN (CAN pour "*Controller Area Network*"). Le bloc de prévision de tangage 10 prélève sur le réseau multiplexé les signaux correspondant à la vitesse longitudinale $\dot{x}$ du véhicule 9, à la pression du maître cylindre P et à la consigne de puissance moteur M du véhicule 9. En variante, le bloc de prévision de tangage 10 est relié directement à des capteurs permettant de relever les données précitées. En fonction des données disponibles, le bloc de prévision de tangage 10 peut être configuré pour déduire les données précitées des données disponibles. Par exemple, la vitesse longitudinale $\dot{x}$ du véhicule 9 peut être déduite des vitesses de rotation d'une ou plusieurs roues et/ou d'un régime moteur.

Le bloc de prévision de tangage 10 reçoit ainsi en entrée une donnée représentative de la vitesse longitudinale $\dot{x}$ du véhicule 9, une donnée représentative de la pression du maître cylindre P et une donnée représentative de la consigne de puissance moteur M. Dans l'exemple décrit ici, la disponibilité d'autres données d'état que celles représentatives de la vitesse longitudinale $\dot{x}$, de la donnée représentative de la pression du maître cylindre P et de la donnée représentative de la consigne de puissance moteur M sont superflues pour le bon fonctionnement du bloc de prévision de tangage 10 du système 1.

Le bloc de prévision de tangage 10 calcule une donnée représentative d'un mouvement de tangage. Ici, l'accélération des mouvements de tangage $\ddot{\varphi}_{est, t1}$ est estimée à un instant $t_1$ en fonction de la donnée représentative de la vitesse longitudinale $\dot{x}$ du véhicule 9, de la donnée représentative de la pression du maître cylindre P et de la donnée représentative de la consigne de puissance moteur M relevées à $t_0$, $t_1$ étant postérieur à $t_0$. À ce stade, l'accélération réelle des mouvements de tangage à l'instant $t_1$ ($\ddot{\varphi}_{réel, t1}$) n'est pas mesurée physiquement, elle résulte d'une estimation par calcul et en avance de phase.

Dans l'exemple décrit ici, la relation liant la pression du maître cylindre P et la consigne de puissance moteur M à la vitesse de tangage $\dot{\varphi}$ est donnée, dans le domaine fréquentiel, s représentant l'opérateur de Laplace, par la fonction de transfert suivante :

$$\frac{\dot{\varphi}(s)}{\gamma(s)} = \frac{G_\alpha \cdot s}{s^2 + 2\xi_\gamma \omega_{n_\gamma} \cdot s + \omega^2_{n_\gamma}}$$

Où

$G_\alpha$ représente le gain statique de cette fonction de transfert, $\omega_{n_\gamma}$ sa pulsation propre et $\xi_\gamma$ son coefficient d'amortissement. Ces paramètres dépendent de la l'architecture et de la configuration du véhicule 9 et de sa vitesse longitudinale $\dot{x}$. Ces paramètres sont déterminés en fonction de la géométrie du châssis et de la direction, des caractéristiques des trains et des masses. De tels paramètres sont identifiés lors d'essai dans une phase de mise au point en fonction de chaque véhicule 9. Les paramètres structurels peuvent être obtenus par étalonnage du système 1 par rapport au véhicule 9 dans lequel il est installé. Ces paramètres sont préétablis et stockés dans une mémoire accessible par le bloc de prévision de tangage 10.

$\gamma$ représente l'accélération longitudinale, déduite sur la base de la vitesse longitudinale $\dot{x}$ en fonction de la pression du maître cylindre P et de la consigne de puissance moteur M à un instant donné $t_0$. L'accélération longitudinale $\gamma$ est donc ici estimée en avance de phase, ce qui permet une bonne réactivité.

La vitesse de tangage $\dot{\varphi}$ à l'instant $t_1$ peut être estimée en avance de phase au moyen de la pression du maître cylindre P et de la consigne de puissance moteur M à l'instant $t_0$, où $t_1$ est postérieur à $t_0$. La mesure physique en temps réel de la position angulaire de tangage $\varphi$ du véhicule 9 est superflue. Les mouvements de tangage de la caisse 11 lors du roulage du véhicule 9 sont déterminés en avance de phase. La réactivité du système 1 s'en trouve améliorée.

Le bloc 10 est en outre agencé pour calculer à partir de valeurs de vitesses de tangage estimées $\dot{\varphi}$ une valeur d'accélération de tangage $\ddot{\varphi}_{est, t1}$ par dérivation temporelle.

Le bloc de calcul de commande 30 comprend un module de calcul du niveau de commande 31 recevant en entrée la donnée représentative d'un mouvement de tangage, ici l'accélération des mouvements de tangage $\ddot{\varphi}_{est, t1}$, estimée par le bloc de prévision de tangage 10.

Ce module 31 reçoit en outre en entrée la valeur de vitesse du véhicule $\dot{x}$.

Le module de calcul du niveau de commande 31 détermine une valeur de commande $K_{\varphi, t1}$ destinée aux amortisseurs 22, 23, 24, 25 du véhicule 9.

Pour la détermination de la valeur de commande $K_{\varphi, t1}$, le module 31 utilise une cartographie $C_i$. Dans l'exemple décrit ici, la cartographie $C_i$ est choisie parmi plusieurs cartographies $C_1$, $C_2$,..., $C_n$. Les cartographies $C_1$ à $C_n$ sont stockées sur une mémoire 40 accessible par le bloc de calcul de commande 30.

Dans l'exemple décrit ici, la sélection de la cartographie $C_i$ est opérée par une commande 50 opérable par un conducteur du véhicule 9, par exemple un bouton dans l'habitacle. Chaque cartographie $C_1$ à $C_n$ correspond à un comportement de l'ensemble d'amortisseurs 22, 23, 24, 25 du véhicule 9. Le choix entre plusieurs cartographies $C_1$ à $C_n$ permet de régler le compromis entre confort et tenue de route. De manière générale, ces comportements sont prédéfinis entre un comportement dit sport pour lequel l'amortissement général est dur pour privilégier la tenue de route du véhicule, et un comportement dit confort pour lequel l'amortissement est souple de manière à limiter les transmissions des vibrations dues aux irrégularités de la route jusqu'au conducteur.

La sélection parmi plusieurs cartographies permet également d'adapter le comportement de l'ensemble des amortisseurs 22, 23, 24, 25 à des conditions d'utilisations spécifiques du véhicule 9. Par exemple, une distinction est opérée entre le franchissement d'obstacles tels que des trottoirs à très faible vitesse et la circulation à haute vitesse sur des sols très réguliers telle qu'une autoroute. La sélection de la cartographie $C_i$ peut être au moins en partie automatisée, par exemple en fonction de la vitesse longitudinale $\dot{x}$ du véhicule 9.

Le bloc de calcul de commande 30 comprend un module de contrôle de la décroissance de la commande 32, agencé pour calculer alors une évolution de la valeur de commande $K_\varphi$ en fonction du temps.

Le module 32 reçoit en entrée la valeur de commande $K_{\varphi, t}$ issue du module 31, ainsi qu'une donnée représentative des résidus de mouvements de tangage. Ici, les résidus de mouvements de tangage se manifestent par le jerk longitudinal $\dddot{\varphi}_{t1}$ du véhicule 9 à l'instant $t_1$. Cette donnée est obtenue par dérivation temporelle de la valeur de l'accélération longitudinale $\ddot{\varphi}_{t1}$ de la caisse 11 à l'instant $t_1$. Le jerk longitudinal constitue un indicateur de tangage résiduel.

Par exemple, plus le niveau du jerk longitudinal $\dddot{\varphi}_{t1}$, est important, plus la vitesse de décroissance de la valeur de commande $K_\varphi$ au cours du temps est faible, voire nulle, et *vice et versa*. Par exemple, l'évolution de la valeur de commande $K_\varphi$ au cours de temps peut prendre la forme d'une droite affine décroissante. La valeur de la pente d'une telle droite affine peut être choisie dépendante des résidus de mouvements de tangage $\dddot{\varphi}_{t1}$.

Par exemple, la valeur de commande peut être exprimée ainsi :

$$K_{\varphi}(t) = K_{\varphi,t1} - D \cdot t$$

pour $t \geq t_1$ et où D est un coefficient positif dépendant de $\dddot{\varphi}_{t1}$.

La pente D peut être choisie proportionnelle aux résidus de mouvements de tangage $\dddot{\varphi}_{t1}$.

En variante, l'évolution de la valeur de commande $K_{\varphi}$ au cours du temps peut être déterminée par le bloc de calcul de commande 30 non seulement en fonction des résidus de mouvements de tangage $\dddot{\varphi}_{t1}$, mais aussi en fonction de la cartographie $C_i$.

Le bloc de calcul de commande 30 transmet un signal de commande à chacun des amortisseurs 22, 23, 24, 25 généré en fonction de la valeur de *commande* $K_{\varphi}$ (t) calculée à un instant t.

La valeur de commande $K_{\varphi}$ initiale et/ou la fonction de la valeur de commande en fonction du temps $K_{\varphi}$ (t) peut être réévaluée cycliquement.

Un tel système permet d'adapter le comportement des amortisseurs 22, 23, 24, 25 au cours du temps, et en particulier en fonction des résidus de mouvements de tangage $\dddot{\varphi}$ au cours du temps.

Par exemple, lorsque le véhicule 9 entame la montée d'une côte, la caisse 11 est soumise à des mouvements de tangage. L'amortissement peut être rendu temporairement plus dur afin de s'opposer à la rotation de la caisse 11 autour de l'axe de tangage y. Néanmoins, au cours de la montée de la côte, la caisse 11 atteint une position angulaire de tangage $\varphi$ non nulle mais équilibrée. Le système 1 permet d'assouplir progressivement l'amortissement à l'approche de la position d'équilibre. En d'autres termes, le système 1 d'amortissement variable peut être désactivé progressivement en suivant la disparition du mouvement de tangage. L'amortissement, sans être en temps réel au sens strict, est dynamique et adaptable. Un tel système d'amortissement peut être qualifié de semi-actif. Au contraire d'un système qui se contenterait de temporiser l'application d'une commande d'amortissement, le système 1 s'adapte à l'évolution du tangage.

En outre, dans l'exemple décrit ici, le système 1 n'est activé qu'aux conditions cumulatives suivantes :

- pendant un intervalle de temps compris dans un intervalle de temps prédéfini [$t_A$ ; $t_B$], la pression du maître cylindre P est comprise dans une plage [$P_A$, $P_B$] prédéfinie, ou la consigne de puissance moteur M est comprise dans une plage [$M_A$, $M_B$] prédéfinie. Les valeurs des bornes $P_A$, $P_B$, $M_A$, $M_B$, $t_A$, $t_B$ des trois intervalles précités peuvent être définies en fonction de la cartographie $C_i$ sélectionnée et de la vitesse longitudinale du véhicule.

et

- une valeur moyenne sur cet intervalle de temps (par exemple une intégrale entre les instants $t_A$ et $t_B$) de la pression du maître cylindre P ou de la consigne de puissance moteur M est supérieure à une valeur de seuil de pression ou respectivement de puissance. Cette valeur de seuil peut être lue dans une cartographie correspondante, en fonction de la vitesse du véhicule.

En limitant l'activation du système 1, le déclenchement intempestif du système d'amortissement variable est évité. Par exemple, les accélérations ou freinages lents opérés par un conducteur lorsque le véhicule 9 circule sensiblement à l'horizontale à vitesse élevée, par exemple lors d'une conduite sur autoroute, ne déclenche pas l'activation du système 1 d'amortissement variable. Dans cette situation, les mouvements de tangage sont négligeables. Il est alors inutile, voire contreproductif, d'adapter l'amortissement pour réduire de tels mouvements transitoires longitudinaux.

Dans un autre exemple, le freinage ou l'accélération peuvent être provoqués pendant un intervalle de temps élevé. Cela correspond typiquement à une phase de manoeuvre du véhicule 9 dans une pente, par exemple lors du parking. Le véhicule 9 présente une vitesse de déplacement faible. L'activation du système 1 d'amortissement variable est alors sans intérêt.

De manière générale, l'activation du système d'amortissement variable de manière répétée et inadaptée conduit à une sollicitation inutile de la partie électronique du système 1, mais aussi à une usure des composants mécaniques régissant le comportement de chacun des amortisseurs 22, 23, 24, 25. Une telle limitation de l'activation est donc optionnelle mais avantageuse pour une fiabilité à long terme du système 1.

Le bloc 10 et le module 31 sont en avance de phase sur les mouvements de la caisse, alors que le module 32 est fonction des résidus des mouvements de caisse.

Le système 1 combine la prévision d'un mouvement de tangage en avance de phase pour en déduire une valeur de commande destinée aux amortisseurs 22, 23, 24, 25 du véhicule 9, et la détermination de résidus de mouvements de tangage $\dddot{\varphi}$ en temps réel pour déduire une évolution future de la valeur de commande $K_{\varphi}$ à destination des amortisseurs 22, 23, 24, 25. Un tel système permet non seulement de s'affranchir de mesures directes de la position de tangage et permet en outre d'adapter *a posteriori* la commande en fonction du comportement réel du véhicule au cours du temps. La présence de certains capteurs spécifiques dans le véhicule est ainsi rendue superflue. En particulier, la présence de capteurs en des endroits spécifiques tels qu'à proximité du centre des roues est évitée. De tels capteurs sont généralement coûteux non seulement à la conception et à l'installation mais aussi à l'entretien. Par ailleurs, la fiabilité de leurs mesures tend à se dégrader au cours du temps à cause d'usures intrinsèques, de vibrations, de déplacements, etc. Ceci conduit à réduire la fiabilité générale des systèmes existants.

Au contraire, le système décrit ci-dessus nécessite simplement l'utilisation d'une donnée représentative de la pression du maître cylindre P, d'une donnée représentative de la consigne de puissance moteur M, d'une donnée représentative de la vitesse du véhicule et d'une donnée représentative des résidus de mouvements de tangage du véhicule. De telles données peuvent être mesurées directement ou déduites de capteurs conventionnels et souvent indispensables par ailleurs. Par exemple, la pression du maître cylindre P et la consigne de puissance moteur M peuvent être obtenues au moyen de capteurs correspondant. La vitesse longitudinale du véhicule peut être obtenue de diverses manières mais est systématiquement disponible dans les véhicules actuels. La donnée représentative des résidus de mouvements de tangage peut être déduite au moyen d'un capteur d'accélération longitudinale disposé à proximité du centre de gravité du véhicule. De tels capteurs et les données en résultant sont généralement disponibles dans les véhicules récents. L'intégration d'un système tel que décrit ci-dessus dispense donc d'intégrer de nouveaux capteurs spécifiques, tels que ceux détectant les battements de roues par exemple.

L'invention ne se limite pas aux systèmes décrits ci-avant, seulement à titre d'exemples, mais elle englobe toutes les variantes que pourra envisager l'homme de l'art dans le cadre des revendications ci-après.

## Revendications

1. Système (1) de pilotage d'amortisseurs (22, 23, 24, 25) de suspension d'un véhicule (9) automobile comprenant :

   - un bloc de prévision de tangage (10) configuré pour recevoir en entrée des valeurs de paramètres correspondant à un instant $t_0$ et configuré pour calculer une donnée représentative d'un mouvement de tangage estimé ($\ddot{\varphi}_{est,\,t1}$) du véhicule à un instant $t_1$ en fonction des valeurs de paramètres reçues, $t_1$ étant supérieur à to, et
   - un bloc de calcul de commande (30) agencé pour déterminer une valeur de commande ($K_\varphi$) destinée aux amortisseurs du véhicule en fonction de la donnée représentative du mouvement de tangage estimé ($\ddot{\varphi}_{est,\,t1}$) du véhicule à l'instant $t_1$,

   **caractérisé en ce que** le bloc de calcul de commande (30) est en outre configuré pour recevoir en entrée une donnée représentative des résidus de mouvements de tangage ($\dddot{\varphi}_{t1}$) du véhicule (9) à l'instant $t_1$ et à en déduire une consigne de décroissance ($K_\varphi(t)$) dans le temps de la valeur de la commande ($K_\varphi$).

2. Système selon la revendication 1, dans lequel les valeurs de paramètres reçues comprennent une donnée représentative de la vitesse longitudinale ($\dot{x}_{t0}$) du véhicule (9), une donnée représentative de la pression du maître cylindre (P) et une donnée représentative de la consigne de puissance moteur (M) du véhicule (9), à l'instant $t_0$.

3. Système selon l'une des revendications 1 à 2, dans lequel le bloc de calcul de commande est agencé pour déterminer la valeur de commande ($K_\varphi$) à partir d'une cartographie ($C_i$) préétablie.

4. Système selon la revendication 3, dans lequel le bloc de calcul de commande (30) est en outre apte à déduire la consigne de décroissance ($K_\varphi(t)$) dans le temps de la valeur de la commande ($K_\varphi$) en fonction de la cartographie ($C_i$) préétablie.

5. Système selon l'une des revendications 3 ou 4, ledit système étant agencé de sorte que la cartographie préétablie ($C_i$) soit sélectionnable parmi plusieurs cartographies disponibles ($C_1$, $C_2$, $C_3$, ..., $C_n$) par une commande (50) opérable par un conducteur du véhicule (9).

6. Système selon l'une des revendications 1 à 5, dans lequel le bloc de calcul de commande (30) est configuré pour appliquer la décroissance dans le temps de la valeur de la commande ($K_\varphi$) seulement si la pression du maître cylindre (P) et la consigne de puissance moteur (M) sont comprises dans des plages prédéfinies respectives pendant une durée comprise dans une plage prédéfinie.

7. Système selon l'une des revendications 1 à 6, ledit système étant agencé de sorte que la donnée représentative des résidus de mouvements de tangage ($\dddot{\varphi}_{t1}$) du véhicule (9) à l'instant $t_1$ est obtenue à partir de la donnée représentative d'un mouvement de tangage estimé ($\ddot{\varphi}_{est,\,t1}$) issue du bloc de prévision de tangage (10).

8. Véhicule (9) pourvu d'un système (1) selon l'une des revendications 1 à 7.

9. Procédé de pilotage d'amortisseurs de suspension d'un véhicule automobile, comprenant

- calculer une donnée représentative d'un mouvement de tangage estimé du véhicule à un instant $t_1$ en fonction de valeurs de paramètres correspondant à un instant to, $t_1$ étant postérieur à to,
- déduire une valeur de commande destinée aux amortisseurs du véhicule en fonction de la donnée représentative du mouvement de tangage estimé du véhicule à l'instant $t_1$,
- recevoir une donnée représentative des résidus de mouvements de tangage du véhicule à l'instant $t_1$, et
- déduire de la donnée représentative des résidus de mouvements de tangage une consigne de décroissance dans le temps de la valeur de la commande.

10. Produit programme d'ordinateur comprenant des instructions pour effectuer les étapes du procédé selon la revendication 9 lorsque ces instructions sont exécutées par un processeur.

**Patentansprüche**

1. Steuerungssystem (1) von Stoßdämpfern (22, 23, 24, 25) einer Aufhängung eines Kraftfahrzeugs (9), umfassend:

- einen Block zur Vorhersage der Nickbewegung (10), der konfiguriert ist, um im Eingang Parameterwerte zu empfangen, die einem Zeitpunkt $t_0$ entsprechen, und konfiguriert ist, um einen Datenwert, der für eine geschätzte Nickbewegung ($\ddot{\varphi}_{est, t1}$) des Fahrzeugs zu einem Zeitpunkt $t_1$ repräsentativ ist, in Abhängigkeit von den empfangenen Parameterwerten zu berechnen, wobei $t_1$ größer als $t_0$ ist, und
- einen Block zur Steuerungsberechnung (30), der angeordnet ist, um einen Steuerwert ($K_\varphi$), der für die Stoßdämpfer des Fahrzeugs bestimmt ist, in Abhängigkeit von dem Datenwert, der für die geschätzte Nickbewegung ($\ddot{\varphi}_{est, t1}$) des Fahrzeugs zu dem Zeitpunkt $t_1$ repräsentativ ist, zu bestimmen,

**dadurch gekennzeichnet, dass** der Block zur Steuerungsberechnung (30) ferner konfiguriert ist, um im Eingang einen Datenwert zu empfangen, der für die Reste der Nickbewegungen ($\dddot{\varphi}_{t1}$) des Fahrzeugs (9) zu dem Zeitpunkt $t_1$ repräsentativ ist, und daraus einen Sollwert der zeitlichen Abnahme ($K_\varphi(t)$) des Steuerwertes ($K_\varphi$) abzuleiten.

2. System nach Anspruch 1, wobei die empfangenen Parameterwerte einen Datenwert, der für die Längsgeschwindigkeit ($\dot{x}_{t0}$) des Fahrzeugs (9) repräsentativ ist, einen Datenwert, der für den Druck des Hauptzylinders (P) repräsentativ ist, und einen Datenwert aufweisen, der für den Sollwert der Motorleistung (M) des Fahrzeugs (9) zu dem Zeitpunkt $t_0$ repräsentativ ist.

3. System nach einem der Ansprüche 1 bis 2, wobei der Block zur Steuerungsberechnung ausgebildet ist, um den Steuerwert ($K_\varphi$) durch eine vorher festgelegte Kartographie ($C_i$) zu bestimmen.

4. System nach Anspruch 3, wobei der Block zur Steuerungsberechnung (30) ferner geeignet ist, den Sollwert der zeitlichen Abnahme ($K_\varphi(t)$) des Steuerwertes ($K_\varphi$) in Abhängigkeit von der vorher festgelegten Kartographie ($C_i$) abzuleiten.

5. System nach einem der Ansprüche 3 oder 4, wobei das System derart angeordnet ist, dass die vorher festgelegte Kartographie ($C_i$) aus mehreren verfügbaren Kartographien ($C_1, C_2, C_3, ... , C_n$) durch eine Steuerung (50), die von einem Fahrer des Kraftfahrzeugs (9) betätigbar ist, ausgewählt werden kann.

6. System nach einem der Ansprüche 1 bis 5, wobei der Block zur Steuerungsberechnung (30) konfiguriert ist, um die zeitliche Abnahme des Steuerwertes ($K_\varphi$) nur dann anzuwenden, wenn der Druck des Hauptzylinders (P) und der Sollwert der Motorleistung (M) während einer Dauer innerhalb eines vordefinierten Bereiches in jeweiligen vordefinierten Bereichen liegen.

7. System nach einem der Ansprüche 1 bis 6, wobei das System derart angeordnet ist, dass der Datenwert, der für die Reste der Nickbewegungen ($\dddot{\varphi}_{t1}$) des Fahrzeugs (9) zu dem Zeitpunkt $t_1$ repräsentativ ist, durch den für eine geschätzte Nickbewegung ($\ddot{\varphi}_{est, t1}$) repräsentativen Datenwert, der von dem Block zur Vorhersage der Nickbewegung (10) ausgegeben wird, erhalten wird.

8. Fahrzeug (9), das mit einem System (1) nach einem der Ansprüche 1 bis 7 versehen ist.

9. Steuerungsverfahren von Stoßdämpfern einer Aufhängung eines Kraftfahrzeugs, umfassend

- Berechnen eines Datenwertes, der für eine geschätzte Nickbewegung des Fahrzeugs zu einem Zeitpunkt $t_1$ repräsentativ ist, in Abhängigkeit von Parameterwerten, die einem Zeitpunkt $t_0$ entsprechen, wobei $t_1$ zeitlich nach $t_0$ liegt,
- Ableiten eines Steuerwertes, der für die Stoßdämpfer des Fahrzeugs bestimmt ist, in Abhängigkeit von dem Datenwert, der für die geschätzte Nickbewegung des Fahrzeugs zu dem

Zeitpunkt $t_1$ repräsentativ ist,
- Empfangen eines Datenwertes, der für die Reste der Nickbewegungen des Fahrzeugs zu dem Zeitpunkt $t_1$ repräsentativ ist, und
- Ableiten von dem Datenwert, der für die Reste der Nickbewegungen repräsentativ ist, eines Sollwertes der zeitlichen Abnahme des Steuerwertes.

10. Computerprogrammprodukt, das Anweisungen aufweist, um die Schritte des Verfahrens nach Anspruch 9 durchzuführen, wenn diese Anweisungen von einem Prozessor ausgeführt werden.

**Claims**

1. System (1) for controlling suspension dampers (22, 23, 24, 25) of a motor vehicle (9) comprising:

   - a pitch prediction block (10) configured to receive as input values of parameters corresponding to an instant $t_0$ and configured to compute a datum representative of an estimated pitch movement ($\ddot{\varphi}_{\text{est, t1}}$) of the vehicle at an instant $t_1$ as a function of the parameter values received, $t_1$ being greater than to, and
   - a command computation block (30) arranged to determine a command value ($K_\varphi$) intended for the dampers of the vehicle as a function of the datum representative of the estimated pitch movement ($\ddot{\varphi}_{\text{est, t1}}$) of the vehicle at the instant $t_1$,

   **characterized in that** the command computation block (30) is further configured to receive as input a datum representative of the residues of pitch movements ($\dddot{\varphi}_{t1}$) of the vehicle (9) at the instant $t_1$ and deduce therefrom a decay setpoint ($K_\varphi$ (t)) in time of the value of the command ($K_\varphi$).

2. System according to Claim 1, in which the parameter values received comprise a datum representative of the longitudinal speed ($\dot{x}_{t0}$) of the vehicle (9), a datum representative of the pressure of the master cylinder (P) and a datum representative of the engine power setpoint (M) of the vehicle (9), at the instant $t_0$.

3. System according to one of Claims 1 or 2, in which the command computation block is arranged to determine the command value ($K_\varphi$) from a pre-established mapping ($C_i$).

4. System according to Claim 3, in which the command computation block (30) is further capable of deducing the decay setpoint ($K_\varphi$ (t)) in time of the command value ($K_\varphi$) as a function of the pre-established mapping ($C_i$).

5. System according to one of Claims 3 or 4, said system being arranged such that the pre-established mapping ($C_i$) can be selected from several available mappings ($C_1$, $C_2$, $C_3$, ..., $C_n$) by a command (50) that can be operated by a driver of the vehicle (9).

6. System according to one of Claims 1 to 5, in which the command computation block (30) is configured to apply the decay in time of the command value ($K_\varphi$) only if the pressure of the master cylinder (P) and the engine power setpoint (M) lie within respective predefined ranges for a duration lying within a predefined range.

7. System according to one of Claims 1 to 6, said system being arranged such that the datum representative of the residues of pitch movements ($\dddot{\varphi}_{t1}$) of the vehicle (9) at the instant $t_1$ is obtained from the datum representative of an estimated pitch movement ($\ddot{\varphi}_{\text{est, t1}}$) from the pitch prediction block (10).

8. Vehicle (9) provided with a system (1) according to one of Claims 1 to 7.

9. Method for controlling suspension dampers of a motor vehicle, comprising

   - computing a datum representative of an estimated pitch movement of the vehicle at an instant $t_1$ as a function of values of parameters corresponding to an instant to, $t_1$ being later than to,
   - deducing a command value intended for the dampers of the vehicle as a function of the datum representative of the estimated pitch movement of the vehicle at the instant $t_1$,
   - receiving a datum representative of the residues of pitch movements of the vehicle at the instant $t_1$, and
   - deducing from the datum representative of the residues of pitch movements a decay setpoint in time of the command value.

10. Computer program product comprising instructions for performing the steps of the method according to Claim 9 when these instructions are executed by a processor.

**Fig.1**

**Fig.2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2971457

- FR 2890902 A1